# EUROPEAN PATENT SPECIFICATION

(11) **EP 3 640 404 B1**
(45) Date of publication and mention of the grant of the patent: **04.09.2024**
(21) Application number: 18834837.9
(22) Date of filing: 20.07.2018
(51) Int. Cl.: E02F 9/22, F16H 61/423, F16H 61/44, F16H 61/421

(54) **METHOD AND APPARATUS FOR CONTROLLING TRAVEL SPEED OF CONSTRUCTION MACHINE**
VERFAHREN UND VORRICHTUNG ZUR STEUERUNG DER FAHRGESCHWINDIGKEIT EINER BAUMASCHINE
PROCÉDÉ ET APPAREIL DE COMMANDE DE VITESSE DE DÉPLACEMENT D'ENGIN DE CHANTIER

(30) Priority: 20.07.2017 KR 20170091934
(43) Date of publication of application: 22.04.2020
(73) Proprietor: HD Hyundai Infracore Co., Ltd., Incheon 22502 (KR)
(72) Inventor: YEO, Myeongku, Seoul 07225 (KR); KIM, Yunki, Seoul 07691 (KR); HWANG, Inchan, Incheon 21986 (KR)
(74) Representative: Isarpatent
(86) International application number: PCT/KR2018/008246
(87) International publication number: WO 2019/017740

(56) References cited:
- EP-A2- 2 937 474
- WO-A1-2011/093378
- JP-A- 2008 248 981
- JP-A- 2016 084 910
- JP-A- 2017 101 790
- KR-A- 20130 004 328
- KR-B1- 950 002 124
- US-A1- 2002 029 566

## Description

### TECHNICAL FIELD

The present invention relates to a method and an apparatus for controlling a travelling speed of construction machinery. More particularly, the present invention relates to a method of automatically control the travelling speed by adjusting a swash plate angle of a travel motor of construction machinery and a control method for performing the same.

### BACKGROUND ART

JP 2008 248981 A describes a traveling system for a work machine. While construction machinery travels up a slope, speed steps of left and right travel motors may be changed from second speed to first speed. When pump pressures of first and second hydraulic pumps become higher than a predetermined first step shift pressure, the speed steps of the left and right travel motors may be shifted from the second speed to the first speed, while when the pump pressures become lower than a predetermined second step shift pressure, the speed steps of the left and right travel motors may be shifted from the first speed to the second speed.

However, in case that the construction machinery performs a pivot turn for change of direction while travelling in the second speed, if the average pressure of the pump pressures does not reach the predetermined first shift pressure, the speed steps may not be shifted from the second speed to the first speed. Thus, the lack of torque may cause the driver to feel lack of a rotation force and, in some cases, the machine to stall.

### DISCLOSURE OF THE INVENTION

### PROBLEMES TO BE SOLVED

An object of the present invention provides a travelling speed control apparatus of construction machinery for stably shifting rotational speeds of left and right travel motors.

Another object of the present invention provides a travelling speed control method performed by the above travelling speed control apparatus.

### MEANS TO SOLVE THE PROBLEMS

The scope of the present invention is defined by the independent claims.

### EFFECTS OF THE INVENTION

Accordingly, although construction machinery performs a pivot turn for change of direction while travelling in the second speed, speed steps of the first and second travel motors may be automatically changed from the second speed to the first speed to stably shift a driving speed. Thus, convenience may be provided to the driver and work efficiency may be improved.

However, the effect of the invention may not be limited thereto, and may be expanded without being deviated from the scope of the present invention.

### BRIEF DESCRIPTION OF THE DRAWINGS

FIG. 1 is a hydraulic circuit diagram illustrating a control system of construction machinery in accordance with example embodiments.
FIG. 2 is a graph illustrating a controller of a travelling speed control apparatus in FIG. 1.
FIG. 3 is a hydraulic circuit diagram illustrating a control system of construction machinery in accordance with example embodiments.
FIG. 4 is a hydraulic circuit diagram illustrating a control system of construction machinery in accordance with example embodiments.
FIG. 5 is a hydraulic circuit diagram illustrating a control system of construction machinery in accordance with example embodiments.
FIG. 6 is a flow chart illustrating a control method of construction machinery in accordance with example embodiments.

### BEST MODE FOR CARRYING OUT THE INVENTION

Hereinafter, preferable embodiments of the present invention will be explained in detail with reference to the accompanying drawings.

In the drawings, the sizes and relative sizes of components or elements may be exaggerated for clarity.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of example embodiments.

The terminology used herein is for the purpose of describing particular example embodiments only and is not intended to be limiting of example embodiments. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which example embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Example embodiments may, however, be embodied in many different forms and should not be construed as limited to example embodiments set forth herein. Rather, these example embodiments are provided so that this disclosure will be thorough and complete, and will fully convey the scope of example embodiments to those skilled in the art.

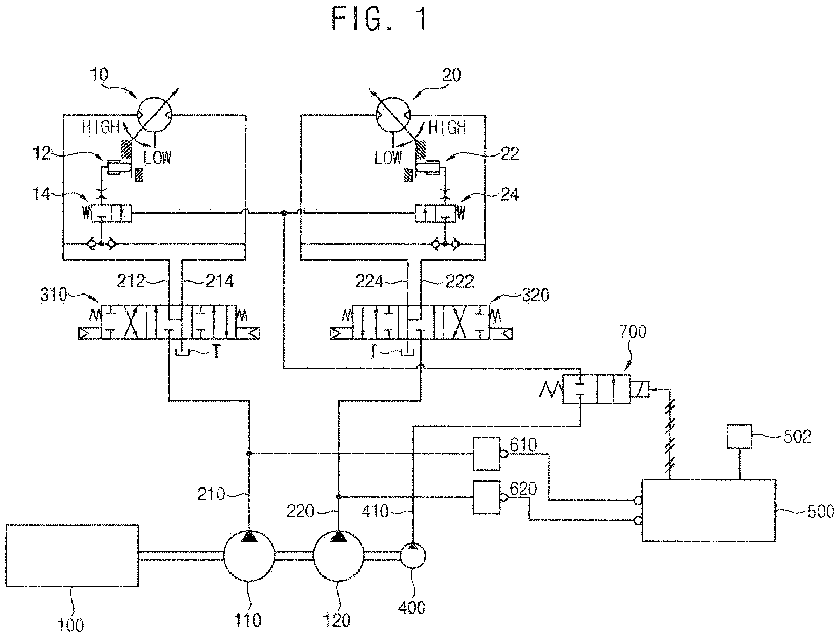

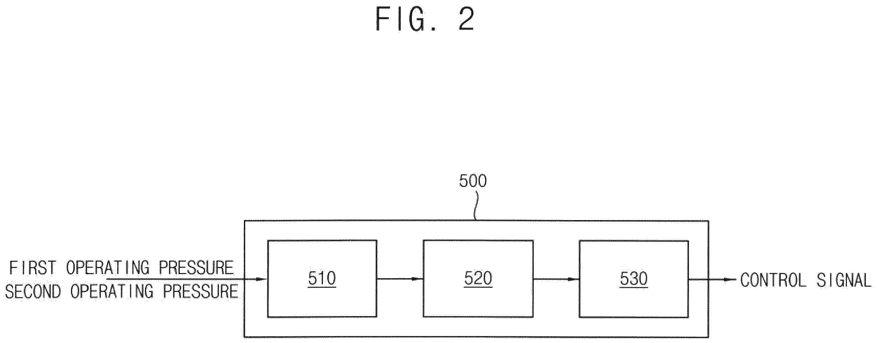

FIG. 1 is a hydraulic circuit diagram illustrating a control system of construction machinery in accordance with example embodiments. FIG. 2 is a graph illustrating a controller of a travelling speed control apparatus in FIG. 1.

Referring to FIGS. 1 and 2, a control system of construction machinery may include first and second hydraulic pumps 110, 120, first and second travel motors 10, 20 connected to the first and second hydraulic pumps 110, 120 and operable by hydraulic oil discharged from the first and second hydraulic pumps 110, 120 respectively, and first and second control valves 310, 320 installed in hydraulic lines between the first and second hydraulic pumps 110, 120 and the first and second travel motors 10, 20 and configured to control operations of the first and second travel motors 10, 20 respectively.

In example embodiments, the construction machinery may include an excavator, a wheel loader, a forklift, etc. For example, the construction machinery may be the excavator including the first travel motor 10 as a left travel motor and the second travel motor 20 as a right travel motor. It will be understood that a travelling speed control apparatus of construction machinery may be applied to the construction machinery including the left travel motor and the right travel motor such as a variable displacement hydraulic motor which is capable of varying an amount of fluid pumped per revolution.

The first and second hydraulic pumps 110, 120 may be connected to an engine 100 through a power take off such that a power of the engine may be transferred to the first and second hydraulic pumps 110, 120 respectively. The first and second hydraulic pumps 110, 120 may be connected to an output shaft of the engine 100, and as the output shaft rotates, the first and second hydraulic pumps may be driven to discharge the hydraulic oil. The engine 100 may include a diesel engine as a driving source of the construction machinery such as the excavator. Additionally, a pilot pump 400 may be connected to the output axis of the engine, and as the output axis of the engine rotates, the pilot pump 400 may be driven to discharge a pilot working oil. For example, the pilot pump may include a gear pump. In this case, the hydraulic oil and the pilot working oil may include substantially the same material.

The first hydraulic pump 110 may be connected to the first control valve 310 through a first hydraulic line 210. The second hydraulic pump 120 may be connected to the second control valve 320 through a second hydraulic line 220. The hydraulic oil discharged from the first hydraulic pump 110 may be supplied to the first travel motor 10 via the first control valve 310. The hydraulic oil discharged from the second hydraulic pump 120 may be supplied to the second travel motor 20 via the second control valve 320.

Although it is not illustrated in the figures, another control valve may be installed in the first and second hydraulic lines 210, 220 to control operations of another actuator. The actuator may include a boom cylinder, an arm cylinder, a bucket cylinder, a swing motor, etc. Additionally, the control system of construction machinery may include a main control valve (MCV) as an assembly including the control valves. The main control valve may be an electro-hydraulic main control valve including an electro proportional pressure reducing valve (EPPRV) which controls the pilot working oil supplied to a spool of the control valve according to an inputted electrical signal.

In example embodiments, the control system of construction machinery may further include electro proportional pressure reducing valves (not illustrated) which output a secondary pressure corresponding to the inputted electrical signal to the first and second control valves 310, 320 respectively. The electro proportional pressure reducing valves may be provided in both sides of a spool of each of the first and second control valves 310, 320, to selectively supply the pilot working oil for controlling a position of the spool.

The pilot working oil discharged from the pilot pump 400 may be supplied to the spools of the first and second control valves 310, 320 via the electro proportional pressure reducing valves respectively. The electro proportional pressure reducing valves may supply a pilot signal pressure in proportion to the inputted control signal. The movement of the spool of each of the first and second control valves 310, 320 may be controlled by the pilot signal pressure. A movement direction of the spool may be determined by a supply direction of the pilot signal pressure, and a displacement amount of the spool may be determined by a magnitude of the pilot signal pressure.

In example embodiments, the first travel motor 10 may be a left travel motor, and the second travel motor 20 may be a right travel motor.

The first control valve 310 may be connected to the first travel motor 10, that is, A, B ports of the first travel motor, through a first left travelling hydraulic line 212 and a second left travelling hydraulic line 214 respectively. Accordingly, the first control valve 310 may be switched to selectively supply the hydraulic oil discharged from the first hydraulic pump 110 to the A, B ports of the first travel motor, to thereby control a rotation direction and a rotational speed of the first travel motor. The hydraulic oil discharged from the A, B ports of the first travel motor 10 may be drained to a drain tank T through the first left travelling hydraulic line 212 and the second left travelling hydraulic line 214 via the first control valve 310.

The second control valve 320 may be connected to the second travel motor 20, that is, A, B ports of the second travel motor, through a first right travelling hydraulic line 222 and a second right travelling hydraulic line 224 respectively. Accordingly, the second control valve 320 may be switched to selectively supply the hydraulic oil discharged from the second hydraulic pump 120 to the A, B ports of the second travel motor, to thereby control a rotation direction and a rotational speed of the second travel motor. The hydraulic oil discharged from the A, B ports of the second travel motor 20 may be drained to the drain tank T through the first right travelling hydraulic line 222 and the second right travelling hydraulic line 224 via the second control valve 320.

In example embodiments, the first travel motor 10 may include a first oblique angle adjusting cylinder 12 operable to adjust an angle of a swash plate of the first travel motor and a first speed shift valve 14 switchable by a pilot signal pressure to drive the first oblique angle adjusting cylinder 12. The first speed shift valve 14 may be switched by the pilot signal pressure to shift rotational speed steps of the first travel motor 10 between first speed and second speed.

For example, when the pilot signal pressure is supplied to the first speed shift valve 14, the first oblique angle adjusting cylinder 12 may be driven to move forward to decrease the angle of the swash plate of the first travel motor 10 such that the speed step of the first travel motor 10 may be changed from the first speed to the second speed. When the supply of the pilot signal pressure to the first speed shift valve 14 may be stopped, the first oblique angle adjusting cylinder 12 may be driven to move backward to increase the angle of the swash plate of the first travel motor 10 such that the speed step of the first travel motor 10 may be changed from the second speed to the first speed.

Similarly to the first travel motor 10, the second travel motor 20 may include a second oblique angle adjusting cylinder 22 operable to adjust an angle of a swash plate of the second travel motor and a second speed shift valve 24 switchable by a pilot signal pressure to drive the second oblique angle adjusting cylinder 22. The second speed shift valve 24 may be switched by the pilot signal pressure to shift the rotational speed of the second travel motor 20 between first speed and second speed.

For example, when the pilot signal pressure is supplied to the second speed shift valve 24, the second oblique angle adjusting cylinder 22 may be driven to move forward to decrease the angle of the swash plate of the second travel motor 20 such that the speed step of the second travel motor 20 may be changed from the first speed to the second speed. When the supply of the pilot signal pressure to the second speed shift valve 24 may be stopped, the second oblique angle adjusting cylinder 22 may be driven to move backward to increase the angle of the swash plate of the second travel motor 20 such that the speed step of the second travel motor 20 may be changed from the second speed to the first speed.

According to the invention, a travelling speed control apparatus of the control system, includes first and second pressure sensors 610, 620 installed in the hydraulic lines 210, 220 to detect first and second pump pressures acting on the first and second travel motors 10, 20 respectively, at least one travelling speed control valve 700 switchable by an inputted travelling speed control signal to adjust a swash plate angle of each of the first and second travel motors 10, 20, and a travelling speed controller 500 configured to compare a difference value between the first and second pump pressures with a predetermined value in case that a travelling speed auto control mode is selected and output the travelling speed control signal to the travelling speed control valve 700 to decrease the rotational speeds of the first and second travel motors 10, 20 when the difference value is greater than the predetermined value. The travelling speed control apparatus further includes a selection portion 502 through which an operator selects the travelling speed auto control mode.

The first pressure sensor 610 is installed in the first hydraulic line 210 to detect a pressure of the hydraulic oil discharged from the first hydraulic pump 110 (that is, first pump pressure). The second pressure sensor 620 is installed in the second hydraulic line 220 to detect a pressure of the hydraulic oil discharged from the second hydraulic pump 120 (that is, first pump pressure).

The travelling speed control valve 700 may be installed in a control line 410 between the pilot pump 400 and the first and second travel motors 10, 20. The travelling speed control valve 700 is switched by the travelling speed control signal to adjust the swash plate angle of each of the first and second travel motors 10, 20. For example, the travelling speed control valve 700 may include a solenoid valve.

The control line 410 may be connected to the first and second speed shift valves 14 and 24 respectively. Accordingly, the pilot working oil discharged from the pilot pump 400 may be supplied to spools of the first and second speed shift valves 14, 24 via the travelling speed control valve 700 respectively.

When the travelling speed control valve 700 is turned ON by the travelling speed control signal, the pilot working oil may be supplied to the first and second speed shift valves 14, 24 to change the rotational speed steps of the first and second travel motors 10, 20 from the first speed to the second speed. When the travelling speed control valve 700 is turned OFF by the travelling speed control signal, the supply of the pilot signal pressure to the first and second speed shift valves 14, 24 may be stopped to change the rotational speed steps of the first and second travel motors 10, 20 from the second speed to the first speed.

In case that the travelling speed auto control mode is selected by an operator, the travelling speed controller 500 analyses the difference value between the first and second pump pressures and output the travelling speed control signal to the travelling speed control valve 700 to control the rotational speeds of the first and second travel motors 10, 20. As illustrated in FIG. 2, the travelling speed controller 500 may include a data receiver 510 to receive the first and second pump pressures, a calculator 520 to compare the difference value between the first and second pump pressures with the predetermined value, and a control signal output portion 530 to output the travelling speed control signal determined based on the comparison result to the travelling speed control valve 700.

For example, in case that the construction machinery performs a pivot turn for change of direction while travelling in the second speed, the detected first pump pressure is 0 bar and the detected second pump pressure may be 300 bar. The predetermined value may be preset 250 bar. In this case, because the difference value between the first and second pump pressures is greater than the predetermined value (250 bar), the travelling speed controller 500 outputs a travelling speed control signal for shifting the rotational speed steps of the first and second travel motors 10, 20 from the second speed to the first speed (second speed → first speed shift control signal) to the travelling speed control valve 700.

When the travelling speed control signal (second speed → first speed shift control signal) is inputted to the travelling speed control valve 700, the travelling speed control valve 700 may be turned OFF, and thus, the supply of the pilot working oil to the first and second speed shift valves 14, 24 may be stopped. As the supply of the pilot working oil to the first and second speed shift valves 14, 24 may be stopped, the first and second oblique angle adjusting cylinders 12, 22 may be driven to move backward to increase the angles of the swash plates of the first and second travel motors 10, 20 such that the speed steps of the first and second travel motors 10, 20 may be changed from the second speed to the first speed.

According to a comparative embodiment, an average value of the first and second pump pressures may be compared with the predetermined value, and when the average value is greater than the predetermined value, the speed steps of the first and second travel motors may be controlled to be changed. In this case, because the average value of the first and second pump pressures is less than the predetermined value (250 bar), the speed steps may not be shifted. Thus, the lack of torque may cause the driver to feel lack of a rotation force and, in some cases, the machine to stall.

According to the invention, when it is determined that the first and second pump pressures are less than a predetermined value (second step shift pressure), the travelling speed controller 500 outputs a travelling speed control signal for shifting the rotational speed steps of the first and second travel motors 10, 20 from the first speed to the second speed (first speed → second speed shift control signal) to the travelling speed control valve 700.

When the travelling speed control signal (first speed → second speed shift control signal) is inputted to the travelling speed control valve 700, the travelling speed control valve 700 may be turned ON, and thus, the pilot working oil may be supplied to the first and second speed shift valves 14, 24. As the pilot working oil is supplied to the first and second speed shift valves 14, 24, the first and second oblique angle adjusting cylinders 12, 22 may be driven to move forward to decrease the angles of the swash plates of the first and second travel motors 10, 20 such that the speed steps of the first and second travel motors 10, 20 may be changed from the first speed to the second speed.

As mentioned above, in case that the travelling speed auto control mode is selected, the travelling speed control apparatus may detect and compare first and second pump pressures of the hydraulic oil discharged from the first and second hydraulic pumps for driving the first and second travel motors, and shift the rotational speeds of the first and second travel motors between first speed and second speed.

Accordingly, although the construction machinery performs a pivot turn for change of direction while travelling in the second speed, the speed steps of the first and second travel motors may be automatically changed from the second speed to the first speed to stably shift a driving speed, thereby providing convenience to the driver.

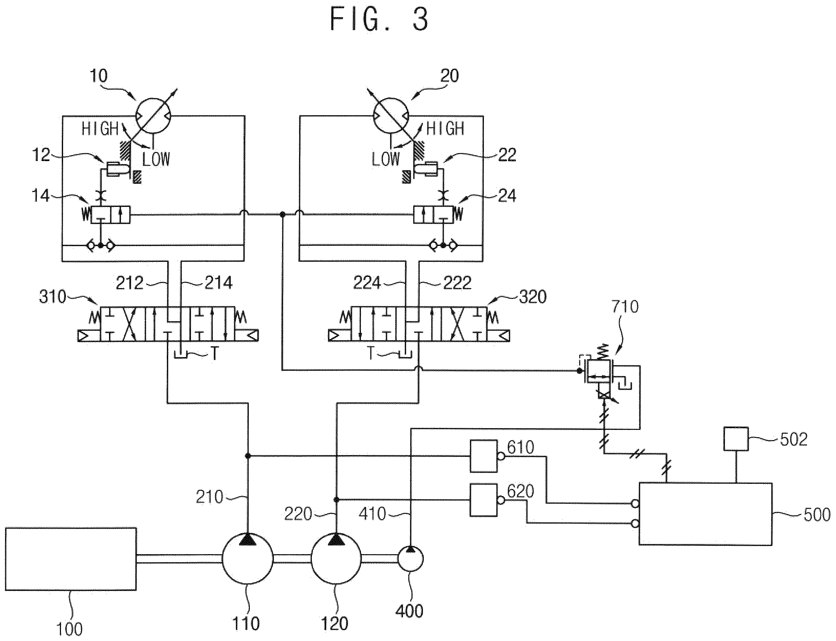

FIG. 3 is a hydraulic circuit diagram illustrating a control system of construction machinery in accordance with example embodiments. The control system may be substantially the same as or similar to the control system described with reference to FIGS. 1 and 2, except a configuration of a travelling speed control valve of a travelling speed control apparatus. Thus, same reference numerals will be used to refer to the same or like elements and any further repetitive explanation concerning the above elements will be omitted.

Referring to FIG. 3, a travelling speed control apparatus of construction machinery may include at least one travelling speed control valve 710 switchable by an inputted travelling speed control signal to adjust a swash plate angle of each of first and second travel motors 10, 20. For example, the travelling speed control valve 710 may include an electro proportional pressure reducing valve (EPPRV). The electro proportional pressure reducing valve may be installed in a control line 410 between a pilot pump 400 and the first and second travel motors 10, 20.

The electro proportional pressure reducing valve may supply a pilot signal pressure in proportion to the travelling speed control signal from a travelling speed controller 500 to spools of first and second speed shift valves 14, 24 to control displacement amounts of the spools of the first and second speed shift valves 14, 24.

In example embodiments, the travelling speed controller 500 may calculate an average value and/or a difference value of first and second pump pressures of hydraulic oil discharged from first and second hydraulic pumps 110, 120 respectively, compare the average value and/or the difference value with a predetermined value and output the travelling speed control signal based on the comparison result to the travelling speed control valve 710 for controlling rotational speeds of the first and second travel motors 10, 20. The travelling speed control valve 710 may supply a pilot signal pressure in proportion to the inputted travelling speed control signal to the first and second speed shift valves 14, 24.

The movement of the spools of the first and second speed shift valves 14, 24 may be controlled by the pilot signal pressure. That is, the displacement amounts of the spools of the first and second speed shift valves 14, 24 may be determined by a magnitude of the pilot signal pressure. Thus, the swash plate angle of each of the first and second travel motors 10, 20 may be adjusted (for example, decreased) in proportion to the displacement amount of each spool to thereby perform continuously variable transmission.

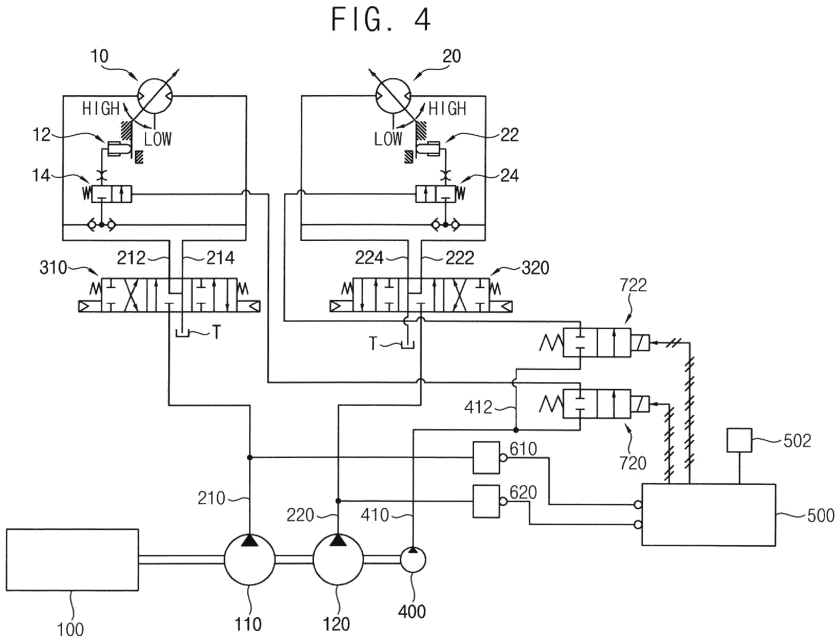

FIG. 4 is a hydraulic circuit diagram illustrating a control system of construction machinery in accordance with example embodiments. The control system may be substantially the same as or similar to the control system described with reference to FIGS. 1 and 2, except a configuration of a travelling speed control valve of a travelling speed control apparatus. Thus, same reference numerals will be used to refer to the same or like elements and any further repetitive explanation concerning the above elements will be omitted.

Referring to FIG. 4, a travelling speed control apparatus of construction machinery may include first and second travelling speed control valves 720, 722 switchable by an inputted travelling speed control signal to adjust swash plate angles of first and second travel motors 10, 20 respectively. For example, the first and second travelling speed control valves 720, 722 may include a solenoid valve.

In particular, the first travelling speed control valve 720 may be installed in a control line 410 between a pilot pump 400 and the first travel motor 10, and may be switched by a first travelling speed control signal to adjust the swash plate angle of the first travel motor 10. The second travelling speed control valve 722 may be installed in a control line 412 between the pilot pump 400 and the second travel motor 20, and may be switched by a second travelling speed control signal to adjust the swash plate angle of the second travel motor 20.

Accordingly, a pilot working oil discharged from the pilot pump 400 may be supplied to a spool of a first speed shift valve 14 via the first travelling speed control valve 720, and the pilot working oil discharged from the pilot pump 400 may be supplied to a spool of a second speed shift valve 24 via the second travelling speed control valve 722.

In example embodiments, a travelling speed controller 500 may calculate and analyze an average value and/or a difference value of first and second pump pressures of hydraulic oil discharged from first and second hydraulic pumps 110, 120 respectively, and output a first travelling speed control signal to the first travelling speed control valve 720 for controlling a rotational speed of the first travel motor 10 and output a second travelling speed control signal to the second travelling speed valve 722 for controlling a rotational speed of the second travel motor 20.

When the first travelling speed control valve 720 is turned ON by the first travelling speed control signal, the pilot working oil may be supplied to the first speed shift valve 14 to change a rotational speed step of the first travel motor 10 from first speed to second speed. When the second travelling speed control valve 722 is turned ON by the second travelling speed control signal, the pilot working oil may be supplied to the second speed shift valve 24 to change a rotational speed step of the second travel motor 20 from first speed to second speed.

On the other hand, when the first travelling speed control valve 720 is turned OFF by the first travelling speed control signal, the supply of the pilot signal pressure to the first speed shift valve 14 may be stopped to change the rotational speed step of the first travel motor 10 from the second speed to the first speed. When the second travelling speed control valve 722 is turned OFF by the second travelling speed control signal, the supply of the pilot signal pressure to the second speed shift valve 24 may be stopped to change the rotational speed step of the second travel motor 20 from the second speed to the first speed.

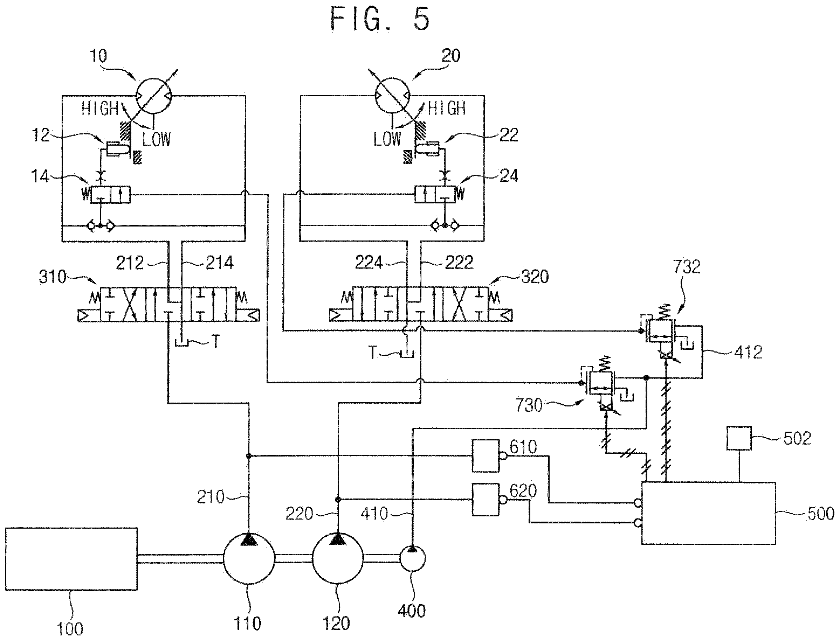

FIG. 5 is a hydraulic circuit diagram illustrating a control system of construction machinery in accordance with example embodiments. The control system may be substantially the same as or similar to the control system described with reference to FIGS. 1 and 2, except a configuration of a travelling speed control valve of a travelling speed control apparatus. Thus, same reference numerals will be used to refer to the same or like elements and any further repetitive explanation concerning the above elements will be omitted.

Referring to FIG. 5, a travelling speed control apparatus of construction machinery may include first and second travelling speed control valves 730, 732 switchable by an inputted travelling speed control signal to adjust swash plate angles of first and second travel motors 10, 20 respectively. For example, the first and second travelling speed control valves 730, 732 may include an electro proportional pressure reducing valve (EPPRV).

In particular, the first travelling speed control valve 730 may be installed in a control line 410 between a pilot pump 400 and the first travel motor 10, and the second travelling speed control valve 732 may be installed in a control line 412 between the pilot pump 400 and the second travel motor 20.

The first travelling speed control valve 730 may supply a first pilot signal pressure in proportion to a first travelling speed control signal from a travelling speed controller 500 to a spool of a first speed shift valve 14 to control a displacement amount of the spool of the first speed shift valve 14. The second travelling speed control valve 732 may supply a second pilot signal pressure in proportion to a second travelling speed control signal from the travelling speed controller 500 to a spool of a second speed shift valve 24 to control a displacement amount of the spool of the second speed shift valve 24.

In example embodiments, the travelling speed controller 500 may calculate an average value and/or a difference value of first and second pump pressures of hydraulic oil discharged from first and second hydraulic pumps 110, 120 respectively, compare and analyze the average value and/or the difference value with a predetermined value and output the first travelling speed control signal to the first travelling speed control valve 730 for controlling a rotational speed of the first travel motor 10 and the second travelling speed control signal to the second travelling speed control valve 732 for controlling a rotational speed of the second travel motor 20 based on the comparison result. The first travelling speed control valve 730 may supply the first pilot signal pressure in proportion to the inputted first travelling speed control signal to the first speed shift valve 14. The second travelling speed control valve 732 may supply the second pilot signal pressure in proportion to the inputted second travelling speed control signal to the second speed shift valve 24.

The movement of the spool of the first speed shift valve 14 may be controlled by the first pilot signal pressure. That is, the displacement amount of the spool of the first speed shift valve 14 may be determined by a magnitude of the first pilot signal pressure. The movement of the spool of the second speed shift valve 24 may be controlled by the second pilot signal pressure. That is, the displacement amount of the spool of the second speed shift valve 24 may be determined by a magnitude of the second pilot signal pressure. Thus, the swash plate angle of each of the first and second travel motors 10, 20 may be adjusted (for example, decreased) in proportion to the displacement amount of each spool to thereby perform continuously variable transmission.

Hereinafter, a method of controlling construction machinery using the control system in FIG. 1 will be explained.

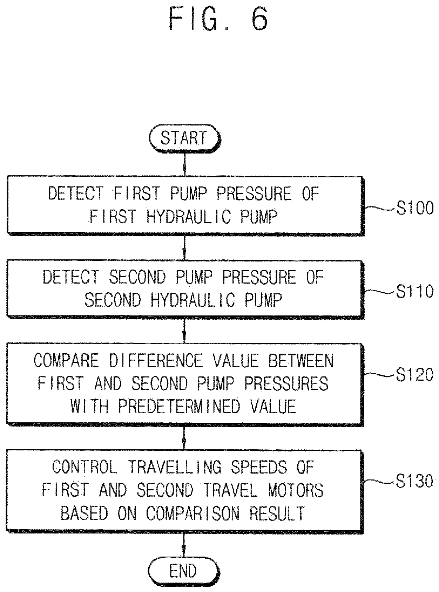

FIG. 6 is a flow chart illustrating a control method of construction machinery in accordance with example embodiments.

Referring to FIGS. 1, 2 and 6, hydraulic oil is supplied from first and second hydraulic pumps 10, 20 to first and second travel motors 10, 20 respectively, and a first pump pressure of the first hydraulic pump 110 and a second pump pressure of the second hydraulic pump 120 may be detected (S100, S110).

According to the invention, a travelling speed controller 500 of construction machinery outputs a travelling speed control signal for second speed step travelling, to a travelling speed control valve 700. When the travelling speed control valve 700 is turned ON by the travelling speed control signal, a pilot working oil may be supplied to first and second speed shift valves 14, 24 to change rotational speed steps of the first and second travel motors 10, 20 from first speed to second speed. Accordingly, as the first and second hydraulic pumps 10, 20 supply the hydraulic oil to the first and second travel motors 10, 20, the construction machinery may travel in the second speed step.

In case that an operator manipulates that the construction machinery performs a pivot turn for change of direction while travelling in the second speed, first and second pressure sensors 610, 620 detect the first and second pump pressures of the first and second hydraulic pumps 110, 120.

Then, a difference value between the first and second pump pressures is compared with a predetermined valve (S 120), and rotational speeds of the first and second travel motors 10, 20 are controlled based on the comparison result (S130).

When an operator selects a travelling speed auto control mode through a selection portion 502, the travelling speed controller 500 receives the first and second pump pressures and compare the difference value with the predetermined value.

During the pivot turn the detected first pump pressure is 0 bar and the detected second pump pressure may be 300 bar. In this case, because the difference value between the first and second pump pressures is greater than the predetermined value (250 bar), the travelling speed controller 500 outputs a travelling speed control signal for shifting the rotational speed steps of the first and second travel motors 10, 20 from the second speed to the first speed (second speed → first speed shift control signal) to the travelling speed control valve 700.

When the travelling speed control signal (second speed → first speed shift control signal) is inputted to the travelling speed control valve 700, the travelling speed control valve 700 may be turned OFF, and thus, the supply of the pilot working oil to the first and second speed shift valves 14, 24 may be stopped. As the supply of the pilot working oil to the first and second speed shift valves 14, 24 is stopped, first and second oblique angle adjusting cylinders 12, 22 may be driven to move backward to increase angles of swash plates of the first and second travel motors 10, 20 such that the speed steps of the first and second travel motors 10, 20 may be changed from the second speed to the first speed.

As mentioned above, in the travelling speed control method of construction machinery, in case that the travelling speed auto control mode is selected, the first and second pump pressures of the hydraulic oil discharged from the first and second hydraulic pumps 110, 120 for driving the first and second travel motors 10, 20 are detected, the difference value between the first and second pump pressures is compared with the predetermined value, and based on the comparison result, the rotational speeds of the first and second travel motors are shifted between the first speed and the second speed.

Accordingly, although the construction machinery performs a pivot turn for change of direction while travelling in the second speed, the speed steps of the first and second travel motors are automatically changed from the second speed to the first speed to stably shift a driving speed. Thus, convenience may be provided to the driver and work efficiency may be improved.

The present invention has been explained with reference to preferable embodiments, however, those skilled in the art may understand that the present invention may be modified or changed without being deviated from the scope of the present invention disclosed in the following claims.

### <The description of the reference numerals>

10: first travel motor 12: first oblique angle adjusting cylinder
14: first speed shift valve 20: second travel motor
22: second oblique angle adjusting cylinder 24: second speed shift valve
100: engine 110: first hydraulic pump
120: second hydraulic pump 210: first hydraulic line
212: second hydraulic line 214: second left travelling hydraulic line
220: second hydraulic line 222: first right travelling hydraulic line
224: second right travelling hydraulic line 310: first control valve
320: second control valve 400: pilot pump
500: travelling speed controller 502: selection portion
510: data receiver 520: calculator
530: control signal output portion 610: first pressure sensor
620: second pressure sensor
700, 710, 720, 722, 730, 732: travelling speed control valve

## Claims

1. A travelling speed control apparatus of construction machinery, comprising:
first and second hydraulic pumps (110, 120) configured to supply hydraulic oil to first and second travel motors (10, 20) respectively;
first and second pressure sensors (610, 620) installed in hydraulic lines (210, 220) of the first and second hydraulic pumps (110, 120) configured to detect first and second pump pressures acting on the first and second travel motors (10, 20) respectively;
a selection portion (502) through which an operator selects a travelling speed auto control mode,
at least one travelling speed control valve (700) switchable by an inputted travelling speed control signal configured to adjust a swash plate angle of each of the first and second travel motors (10, 20);
a travelling speed controller (500) configured to compare a difference value between the first and second pump pressures with a predetermined value, output the travelling speed control signal to the travelling speed control valve (700) configured to shift rotational speed steps of the first and second travel motors (10, 20) from second step to first step when the travelling speed controller (500) receives a selection signal of the travelling speed auto control mode from the selection portion (502), one of the first and second pump pressures is 0 bar, and the difference value is greater than the predetermined value, and, when it is determined that the first and second pump pressures are less than a predetermined value, output the travelling speed control signal to the travelling speed control valve (700) configured to shift the rotational speed steps of the first and second travel motors (10, 20) from the first speed to the second speed to the travelling speed control valve (700).

2. The travelling speed control apparatus of construction machinery of claim 1, wherein the travelling speed control valve (700) is configured to adjust to increase the swash plate angle when the difference value is greater than the predetermined value.

3. The travelling speed control apparatus of construction machinery of claim 1, wherein the travelling speed control valve (700) comprises at least one solenoid valve or an electro proportional pressure reducing valve for adjusting the swash plate angle of each of the first and second travel motors (10, 20).

4. The travelling speed control apparatus of construction machinery of claim 1, wherein the first and second travel motors (10, 20) comprise first and second speed shift valves (14, 24) respectively configured to adjust the swash plate angle by a pilot signal pressure supplied from the travelling speed control valve (700).

5. The travelling speed control apparatus of construction machinery of claim 1, further comprising first and second control valves (310, 320) installed respectively in hydraulic lines (210, 220) between the first and second hydraulic pumps (110, 120) and the first and second travel motors (10, 20) configured to control operations of the first and second travel motors (10, 20).

6. A travelling speed control method of construction machinery, comprising:
supplying hydraulic oil from first and second hydraulic pumps (110, 120) to first and second travel motors (10, 20) respectively;
confirming from an operator whether or not a travelling speed auto control mode is selected;
when receiving a selection signal of the travelling speed auto control mode, detecting first and second pump pressures from the first and second hydraulic pumps (110, 120) using first and second pressure sensors (610, 620) installed in hydraulic lines (210, 220) of the first and second hydraulic pumps (110, 120);
determining whether or not a differenced value between the first and second pump pressures is greater than a predetermined value; and
controlling to shift rotational speed steps of the first and second travel motors (10, 20) from second step to first step through adjusting a swash plate angle of each of the first and second travel motors (10, 20) when the driving speed auto control mode is selected, one of the first and second pump pressures is 0 bar, and the difference value is greater than the predetermined value, and then to shift the rotational speed steps of the first and second travel motors (10, 20) from the first speed to the second speed when it is determined that the first and second pump pressures are less than a predetermined value.

7. The travelling speed control method of construction machinery of claim 6, wherein shifting the rotational speed steps of the first and second travel motors (10, 20) comprises adjusting to increase the swash plate angle of each of the first and second travel motors (10, 20).

8. The travelling speed control method of construction machinery of claim 7, wherein adjusting the swash plate angle of each of the first and second travel motors (10, 20) comprises adjusting the swash plate angle by a pilot signal pressure supplied from at least one solenoid valve or an electro proportional pressure reducing valve.

## Patentansprüche

1. Fortbewegungsgeschwindigkeit-Steuervorrichtung einer Baumaschine, umfassend:
eine erste und eine zweite Hydraulikpumpe (110, 120), die eingerichtet sind, um einen ersten bzw einen zweiten Fahrmotor (10, 20) mit Hydrauliköl zu versorgen;
einen ersten und einen zweiten Drucksensor (610, 620), die in Hydraulikleitungen (210, 220) der ersten und der zweiten Hydraulikpumpe (110, 120) installiert und eingerichtet sind, um einen ersten und einen zweiten Pumpendruck zu erfassen, die auf den ersten bzw den zweiten Fahrmotor (10, 20) wirken;
einen Auswahlabschnitt (502), über den ein Bediener einen automatischen Fortbewegungsgeschwindigkeit-Steuermodus auswählt,
mindestens ein Fortbewegungsgeschwindigkeit-Steuerventil (700), das durch ein eingegebenes Fortbewegungsgeschwindigkeit-Steuersignal umschaltbar ist, das eingerichtet ist, um einen Taumelscheibenwinkel jedes des ersten und des zweiten Fahrmotors (10, 20) einzustellen;
eine Fortbewegungsgeschwindigkeit-Steuerung (500), die eingerichtet ist, um einen Differenzwert zwischen dem ersten und dem zweiten Pumpendruck mit einem vorbestimmten Wert zu vergleichen, das Fortbewegungsgeschwindigkeit-Steuersignal an das Fortbewegungsgeschwindigkeit-Steuerventil (700) auszugeben, das eingerichtet ist, um Drehzahlstufen des ersten und des zweiten Fahrmotors (10, 20) von einer zweiten Stufe auf eine erste Stufe zu verschieben, wenn die Fortbewegungsgeschwindigkeit-Steuerung (500) ein Auswahlsignal des automatischen Fortbewegungsgeschwindigkeit-Steuermodus von dem Auswahlabschnitt (502) empfängt, wobei einer von dem ersten und dem zweiten Pumpendruck 0 bar beträgt und der Differenzwert größer als der vorbestimmte Wert ist, und, wenn bestimmt wird, dass der erste und der zweite Pumpendruck kleiner als ein vorbestimmter Wert sind, das Fortbewegungsgeschwindigkeit-Steuersignal an das Fortbewegungsgeschwindigkeit-Steuerventil (700), das eingerichtet ist, um die Drehzahlstufen des ersten und des zweiten Fahrmotors (10, 20) von der ersten Drehzahl auf die zweite Drehzahl zu verschieben, an das Fortbewegungsgeschwindigkeit-Steuerventil (700) auszugeben.

2. Fortbewegungsgeschwindigkeit-Steuervorrichtung einer Baumaschine nach Anspruch 1, wobei das Fortbewegungsgeschwindigkeit-Steuerventil (700) eingerichtet ist, um eine Einstellung vorzunehmen, um den Taumelscheibenwinkel zu vergrößern, wenn der Differenzwert größer ist als der vorbestimmte Wert.

3. Fortbewegungsgeschwindigkeit-Steuervorrichtung einer Baumaschine nach Anspruch 1, wobei das Fortbewegungsgeschwindigkeit-Steuerventil (700) mindestens ein Solenoidventil oder ein elektroproportionales Druckreduzierungsventil zum Einstellen des Taumelscheibenwinkels jedes des ersten und zweiten Fahrmotors (10, 20) umfasst.

4. Fortbewegungsgeschwindigkeit-Steuervorrichtung einer Baumaschine nach Anspruch 1, wobei der erste und der zweite Fahrmotor (10, 20) ein erstes bzw ein zweites Geschwindigkeitsverschiebungsventil (14, 24) umfassen, die eingerichtet sind, um den Taumelscheibenwinkel durch einen Vorsteuersignaldruck einzustellen, der von dem Fortbewegungsgeschwindigkeit-Steuerventil (700) geliefert wird.

5. Fortbewegungsgeschwindigkeit-Steuervorrichtung einer Baumaschine nach Anspruch 1, ferner umfassend ein erstes und ein zweites Steuerventil (310, 320), die jeweils in Hydraulikleitungen (210, 220) zwischen der ersten und der zweiten Hydraulikpumpe (110, 120) und dem ersten und dem zweiten Fahrmotor (10, 20) installiert und eingerichtet sind, um Vorgänge des ersten und des zweiten Fahrmotors (10, 20) zu steuern.

6. Fortbewegungsgeschwindigkeit-Steuerverfahren einer Baumaschine, umfassend:
Versorgen eines ersten bzw eines zweiten Fahrmotors (10, 20) mit Hydrauliköl von einer ersten und einer zweiten Hydraulikpumpe (110, 120);
Bestätigen durch einen Bediener, ob ein automatischer Fortbewegungsgeschwindigkeit-Steuermodus ausgewählt wird oder nicht;
wenn ein Auswahlsignal des automatischen Fortbewegungsgeschwindigkeit-Steuermodus empfangen wird, Erfassen eines ersten und eines zweiten Pumpendrucks von der ersten und der zweiten Hydraulikpumpe (110, 120) unter Verwendung eines ersten und eines zweiten Drucksensors (610, 620), die in Hydraulikleitungen (210, 220) der ersten und der zweiten Hydraulikpumpe (110, 120) installiert sind;
Bestimmen, ob ein Differenzwert zwischen dem ersten und dem zweiten Pumpendruck größer als ein vorbestimmter Wert ist oder nicht; und
Steuern, um die Drehzahlstufen des ersten und des zweiten Fahrmotors (10, 20) von einer zweiten Stufe auf eine erste Stufe durch Einstellen eines Taumelscheibenwinkels jedes des ersten und des zweiten Fahrmotors (10, 20) zu verschieben, wenn der automatische Fahrgeschwindigkeit-Steuermodus ausgewählt wird, wobei einer von dem ersten und dem zweiten Pumpendruck 0 bar beträgt und der Differenzwert größer als der vorbestimmte Wert ist, und um dann die Drehzahlstufen des ersten und des zweiten Fahrmotors (10, 20) von der ersten Drehzahl auf die zweite Drehzahl zu verschieben, wenn bestimmt wird, dass der erste und der zweite Pumpendruck kleiner als ein vorbestimmter Wert sind.

7. Fortbewegungsgeschwindigkeit-Steuerverfahren einer Baumaschine nach Anspruch 6, wobei das Verschieben der Drehzahlstufen des ersten und des zweiten Fahrmotors (10, 20) ein Einstellen umfasst, um den Taumelscheibenwinkel jedes des ersten und des zweiten Fahrmotors (10, 20) zu vergrößern.

8. Fortbewegungsgeschwindigkeit-Steuerverfahren einer Baumaschine nach Anspruch 7, wobei das Einstellen des Taumelscheibenwinkels jedes des ersten und des zweiten Fahrmotors (10, 20) ein Einstellen des Taumelscheibenwinkels durch einen Vorsteuersignaldruck umfasst, der von mindestens einem Solenoidventil oder einem elektroproportionalen Druckreduzierungsventil geliefert wird.

## Revendications

1. Appareil de commande de vitesse de déplacement d'engins de construction, comprenant :
une première et une seconde pompe hydraulique (110, 120) conçues pour alimenter respectivement un premier et un second moteur de déplacement (10, 20) en huile hydraulique ;
un premier et un second capteur de pression (610, 620) installés dans des conduites hydrauliques (210, 220) de la première et la seconde pompe hydraulique (110, 120),
conçus pour détecter une première et une seconde pression de pompe agissant respectivement sur le premier et le second moteur de déplacement (10, 20) ;
une partie de sélection (502) au moyen de laquelle un opérateur sélectionne un mode de commande automatique de vitesse de déplacement,
au moins une valve de commande de vitesse de déplacement (700) apte à être commutée par un signal de commande de vitesse de déplacement entré, conçue pour régler un angle de plateau oscillant du premier et du second moteur de déplacement (10, 20) ;
un dispositif de commande de vitesse de déplacement (500) conçu pour comparer une valeur de différence entre la première et la seconde pression de pompe avec une valeur prédéfinie, fournir à la valve de commande de vitesse de déplacement (700) le signal de commande de vitesse de déplacement conçu pour changer les échelons de vitesse de rotation du premier et du second moteur de déplacement (10, 20) du second échelon au premier échelon quand le dispositif de commande de vitesse de déplacement (500) reçoit un signal de sélection du mode de commande automatique de vitesse de déplacement en provenance de la partie de sélection (502), que l'une de la première et la seconde pression de pompe est de 0 bar, et que la valeur de différence est supérieure à la valeur prédéfinie, et, quand il est déterminé que la première et la seconde pression de pompe sont inférieures à une valeur prédéfinie, fournir à la valve de commande de vitesse de déplacement (700) le signal de commande de vitesse de déplacement conçu pour changer les échelons de vitesse de rotation du premier et du second moteur de déplacement (10, 20) de la première vitesse à la seconde vitesse pour la valve de commande de vitesse de déplacement (700).

2. Appareil de commande de vitesse de déplacement d'engins de construction selon la revendication 1, dans lequel la valve de commande de vitesse de déplacement (700) est conçue pour régler, de façon à l'augmenter, l'angle de plateau oscillant quand la valeur de différence est supérieure à la valeur prédéfinie.

3. Appareil de commande de vitesse de déplacement d'engins de construction selon la revendication 1, dans lequel la valve de commande de vitesse de déplacement (700) comprend au moins une électrovalve ou une valve électro-proportionnelle de réduction de pression pour régler l'angle de plateau oscillant de chacun du premier et du second moteur de déplacement (10, 20).

4. Appareil de commande de vitesse de déplacement d'engins de construction selon la revendication 1, dans lequel le premier et le second moteur de déplacement (10, 20) comprennent une première et une seconde valve de changement de vitesse (14, 24), chacune conçue pour régler l'angle de plateau oscillant par une pression de signal pilote fournie par la valve de commande de vitesse de déplacement (700).

5. Appareil de commande de vitesse de déplacement d'engins de construction selon la revendication 1, comprenant en outre une première et une seconde valve de commande (310, 320) installées respectivement dans des conduites hydrauliques (210, 220) entre la première et la seconde pompe hydraulique (110, 120) et le premier et le second moteur de déplacement (10, 20), conçues pour la commande du fonctionnement du premier et du second moteur de déplacement (10, 20).

6. Procédé de commande de vitesse de déplacement d'engins de construction, comprenant :
l'alimentation d'un premier et d'un second moteur de déplacement (10, 20) en huile hydraulique, respectivement par une première et une seconde pompe hydraulique (110, 120) ;
la confirmation de la part d'un opérateur si un mode de commande automatique de vitesse de déplacement est sélectionné ou non ;
quand un signal de sélection du mode de commande automatique de vitesse de déplacement est reçu, la détection d'une première et d'une seconde pression de pompe provenant de la première et la seconde pompe hydraulique (110, 120) au moyen d'un premier et d'un second capteur de pression (610, 620) installés dans des conduites hydrauliques (210, 220) de la première et la seconde pompe hydraulique (110, 120) ;
la détermination si une valeur différenciée entre la première et la seconde pression de pompe est supérieure à une valeur prédéfinie ou non ; et
la commande afin de changer les échelons de vitesse de rotation du premier et du second moteur de déplacement (10, 20) du second échelon au premier échelon en réglant un angle de plateau oscillant de chacun du premier et du second moteur de déplacement (10, 20) quand le mode de commande automatique de vitesse de conduite est sélectionné, que l'une de la première et la seconde pression de pompe est de 0 bar, et que la valeur de différence est supérieure à la valeur prédéfinie, et ensuite changer les échelons de vitesse de rotation du premier et du second moteur de déplacement (10, 20) de la première vitesse à la seconde vitesse quand il est déterminé que la première et la seconde pression de pompe sont inférieures à une valeur prédéfinie.

7. Procédé de commande de vitesse de déplacement d'engins de construction selon la revendication 6, dans lequel le changement des échelons de vitesse de rotation du premier et du second moteur de déplacement (10, 20) comprend le réglage, de façon à l'augmenter, de l'angle de plateau oscillant de chacun du premier et du second moteur de déplacement (10, 20).

8. Procédé de commande de vitesse de déplacement d'engins de construction selon la revendication 7, dans lequel le réglage de l'angle de plateau oscillant du premier et du second moteur de déplacement (10, 20) comprend le réglage de l'angle de plateau oscillant par une pression de signal pilote fournie par au moins une électrovalve ou une valve électro-proportionnelle de réduction de pression.
